# EUROPÄISCHE PATENTANMELDUNG

(11) **EP 1 887 714 A1**
(43) Veröffentlichungstag der Anmeldung: **13.02.2008**
(21) Anmeldenummer: 06016828.3
(22) Anmeldetag: 11.08.2006
(51) Int. Cl.: H04B 7/26, H04Q 7/36

(54) **Verfahren zur Ressourcenallokation gemäß einem Frequenzmultiplexverfahren und Vorrichtungen**

(71) Anmelder: Nokia Siemens Networks GmbH & Co. KG, 81541 München (DE)
(72) Erfinder: Döttling, Martin, Dr., 85579 Neubiberg (DE); Raaf, Bernhard, 82061 Neuried (DE)

(57) **Zusammenfassung**

Verfahren zur Ressourcenallokation gemäß einem Frequenzmultiplexverfahren und Vorrichtungen

Erläutert wird u. a. ein Verfahren mit dem Schritt:
- Versenden oder Empfangen mit einer Datenübertragungsvorrichtung mindestens eines Datums, das eine Rangfolge angibt, gemäß der ein erster Datenübertragungskanal (DUK1, DUK2) in einem Frequenzbereich Vorrang vor einem zweiten Datenübertragungskanal (DUK2, DUK1) hat.

## Beschreibung

Die Erfindung betrifft Verfahren zur Ressourcenallokation bzw. zur Datenübertragung gemäß einem Frequenzmultiplexverfahren und Vorrichtungen. Solche Verfahren und Vorrichtungen werden beispielsweise in einem UMTS-Netz (Universal Mobile Telecommunication System) verwendet oder in ähnlichen Netzen. Gegebenenfalls werden diese Verfahren aber auch bei anderen Datenübertragungsverfahren eingesetzt, z. B. können solche Verfahren verwendet werden in Netzen der 4-ten Generation (4G oder Beyond 3G), wie sie derzeit beispielsweise im Forschungsprojekt WINNER (Wireless world INitiative New Radio) untersucht werden.

Die Verfahren werden beispielsweise gemeinsam mit, oder ohne Zeitmultiplexverfahren bzw. Codevielfachzugriffsverfahren (CDMA Code Division Multiple Access) eingesetzt.

Insbesondere geht es bei diesen Verfahren um die Zuordnung von so genannten lokalisierten Datenübertragungskanälen, die einen zusammenhängenden Frequenzbereich verwenden, der gegebenenfalls nur zeitweise und nur in Teilabschnitten durch sogenannte verteilte Datenübertragungskanäle ausgespart wird, denen dann dort Vorrang gewährt wird. Die verteilten Datenübertragungskanäle verwenden dagegen über ein breites Frequenzspektrum verteilte schmale Frequenzbereiche. Die lokalisierten Datenübertragungskanäle nutzen bspw. gute Empfangseigenschaften innerhalb eines breiten Frequenzbereiches ausnutzen können, wenn durch die Zuteilung der Ressourcen (scheduling) sichergestellt wird, dass eben solche Frequenzbereiche zugeteilt werden, bei denen durch das aktuelle Fading (schneller Schwund) besonders gute Übertragungseigenschaften herrschen. Dagegen können verteilte Datenübertragungskanäle Frequenzdiversität ausnutzen. Durch Ausnutzen der Diversität kann sichergestellt werden, dass immer eine durchschnittliche Übertragungsqualität verfügbar ist, selbst wenn kein Scheduling durchgeführt wird. Letzteres ist insbesondere für schnell bewegte Mobilstationen relevant, bei denen sich die Kanaleigenschaften so schnell ändern, dass eine Zuweisung von besonders guten Frequenzen impraktikabel wird, da sich die Eigenschaften vom Zeitpunkt der Messung bis zum Zeitpunkt der Zuweisung typischerweise signifikant ändern. Bei langsam bewegten Mobilstationen ist eine solche Zuweisung aber sehr attraktiv, da sich die Eigenschaften wenig ändern. Somit eignet sich die Verwendung von lokalisierten Datenübertragungskanälen für langsam bewegte Funkstationen, wohingegen die Verwendung von verteilten Datenübertragungskanälen für schnell bewegte Stationen interessant ist. Es können aber auch andere Kriterien ausschlaggebend sein, beispielsweise können verteilte Datenübertragungskanäle auch bei solchen Stationen eingesetzt werden, wo relativ selten Daten übertragen werden, so dass es nicht sinnvoll ist, dauernd Kanalzustandsinformationen zu übertragen, und/oder die anfallenden Daten aber mit geringer Verzögerung übertragen werden müssen, man also auch nicht auf günstige Bedingungen warten kann oder ad hoc Kanalzustandsinformationen übertragen kann. Die lokalisierte Übertragung entspricht somit einer frequenzadaptiven Übertragung, wohingegen die verteilte Übertragung ein nicht frequenzadaptiver Übertragungsmodus darstellt.

Es ist Aufgabe der Erfindung, ein einfaches Verfahren zur Datenübertragung gemäß einem Frequenzmultiplexverfahren anzugeben. Außerdem sollen zugehörige Vorrichtungen angegeben werden. Insbesondere soll das Verfahren eine einfache und/oder flexible Zuordnung von lokalisierten Datenübertragungskanälen und von verteilten Datenübertragungskanälen ermöglichen.

Die auf das Verfahren bezogene Aufgabe wird durch ein Verfahren mit den im Patentanspruch 1 angegebenen Merkmalen gelöst. Weiterbildungen sind in den Unteransprüchen angegeben.

Bei dem erfindungsgemäßen Verfahren wird der Schritt ausgeführt:
- Versenden oder Empfangen mit einer Datenübertragungsvorrichtung mindestens eines Datums, das eine Rangfolge angibt, gemäß der ein erster Datenübertragungskanal in einem Frequenzbereich Vorrang vor einem zweiten Datenübertragungskanal hat.

Damit wird keine feste Bevorzugung von verteilten Kanälen auf Kosten von lokalisierten Kanälen durchgeführt. Die Bevorzugung wird variabel gehalten. Das bedeutet, dass die Kanäle bspw. in einer frei wählbaren Reihenfolge angeordnet werden, welche den Vorrang angibt. Die einzelnen Teilbereiche werden bei einer Kollision beispielsweise dem in der Reihenfolge zuerst angegeben Kanal zugeordnet. Allgemeiner gesprochen, wird eine Rangfolge für die Kanäle vorgegeben.

Damit lässt sich der gesamte zur Verfügung stehende Frequenzbereich vollständig für Datenübertragungen nutzen. Außerdem wird auch vermieden, dass ein lokalisierter Kanal zu viele Aussparungen durch verteilte Kanäle enthält. Nur den verteilten Kanälen mit Vorrang vor dem betreffenden lokalisierten Kanal ist es erlaubt, Aussparungen zu erzeugen. Den verteilten Kanälen mit Nachrang zu dem lokalisierten Kanälen ist es dagegen nicht erlaubt, Frequenzen des lokalisierten Kanals zu nutzen.

Besondere Wirkungen ergeben sich insbesondere bei folgendem Szenario: es gibt sehr viele Nutzer bzw. Nutzerendgeräte mit verteilten Kanälen und/oder diese Nutzer bzw. Nutzerendgeräte ermöglichen eine hohe Bandbreite. Das bedeutet, dass ein recht hoher Anteil von z. B. 50 Prozent oder sogar mehr als 50 Prozent der Ressourcen an diese Nutzer vergeben wird. Zusätzlich wird einem Nutzer bzw. Nutzerendgerät ein lokalisierter Kanal zugeordnet und zwar in einem Frequenzbereich, in dem er gute Übertragungsbedingungen vorfindet. Da aber 50 Prozent der Subträger bereits belegt sind, müsste ohne die Erfindung für diesen Nutzer bzw. für dieses Nutzerendgerät eine doppelt so große Bandbreite verwendet werden, von der dann die Hälfte von den verteilten Kanälen belegt wird. Die doppelt so große Bandbreite allein ist noch nicht so nachteilig, besonders nachteilig wäre es aber, dass dann die Aussendung für diesen Nutzer nicht im optimalen Frequenzbereich konzentriert werden könnte. Durch den Ansatz der Erfindung kann jedoch der optimale Frequenzbereich vor "Punktierung" durch die verteilten Datenübertragungskanäle geschützt werden.

Besondere Wirkungen ergeben sich auch bei folgendem Szenario: Es werden fast nur verteilte Kanäle zugeordnet und nur wenige lokalisierte Kanäle. Die verbleibenden Lücken zwischen den verteilten Kanälen würden dann aber auch einem verteilten Kanal ähneln. Damit würden die zuletzt zugeordneten lokalisierten Kanäle praktisch verteilten Kanälen ähneln.

Durch die Erfindung wird auch ein Szenario vermieden, bei dem pro Chunk, d.h. pro kleinster allokierbarer Ressourceeinheit für lokalisierte Kanäle, entweder nur ein lokalisierter Datenübertragungskanal oder nur verteilte Datenübertragungskanäle verwendet werden können. Ein solches Szenario würde insbesondere in dem Fall, dass wenige verteilte Datenübertragungskanäle ggf. zusätzlich noch mit kleinen Datenraten verwendet werden, zu Ineffizienz führen:
- entweder würden wenige sogenannte Chunks bzw. zusammenhängende Frequenzbereiche (im Extremfall nur ein einziger) allokiert und mit wenigen verteilten Kanälen voll belegt werden. In diesem Fall würde Diversität in Frequenzrichtung für jeden verteilten Kanal verloren gehen und die verteilten Kanäle würden lokalisierten Kanälen ähneln.
- oder es werden zwar genügend Chunks allokiert, um Frequenzdiversität sicherzustellen. In diesem Fall sind aber die einzelnen Chunks nur teilweise benutzt und Übertragungskapazität würde verloren gehen.

Damit können sowohl Fälle gehandhabt werden, in denen es besser ist, bestimmte lokalisierte Träger bzw. Trägerfrequenzen gegenüber verteilten Trägern zu bevorzugen. Ebenso ist es aber möglich, bestimmte verteilte Träger gegenüber lokalisierten Trägern zu bevorzugen.

Bei einer Weiterbildung des erfindungsgemäßen Verfahrens erzeugt die erste Datenübertragungsvorrichtung eine Nachricht, in der die Reihenfolge von Daten, insbesondere von Ressourcenallokationen, die Rangfolge angibt. Beispielsweise wird mit zunehmender Position in der Reihenfolge der Vorrang geringer oder umgekehrt. Jedoch sind auch andere Anordnungen möglich. Diese Vorgehensweise ermöglicht, dass nur sehr wenige Daten übertragen werden müssen, weil keine expliziten Rangfolgedaten zu übertragen sind. Zur Übermittlung der Rangfolge müssen die Daten lediglich in der Reihenfolge angeordnet werden, was einfach, z. B. durch Umordnungsprozesse, erreicht werden kann.

Bei einer alternativen Weiterbildung erzeugt die Datenübertragungsvorrichtung mehrere Nachrichten, wobei die Rangfolge von einem für diese Nachrichten festgelegten Ordnungsverfahren abhängt. Geeignete Ordnungsverfahren betreffen:
- die zeitliche Reihenfolge, in der die Nachrichten gesendet werden,
- die Frequenzen, auf denen die Nachrichten gesendet werden,
- die Sendeleistungen, mit denen die Nachrichten gesendet werden,
- Stärken oder Arten der Fehlerkodierungen, mit denen die Nachrichten gegen Übertragungsfehler kodiert werden, und/oder
- die Modulationsverfahren, mit denen die Nachrichten gesendet werden.
   Alternativ wird die Ordnung der mehreren Nachrichten signalisiert, bspw. über ein Reihenfolgedatum in jeder dieser Nachrichten.

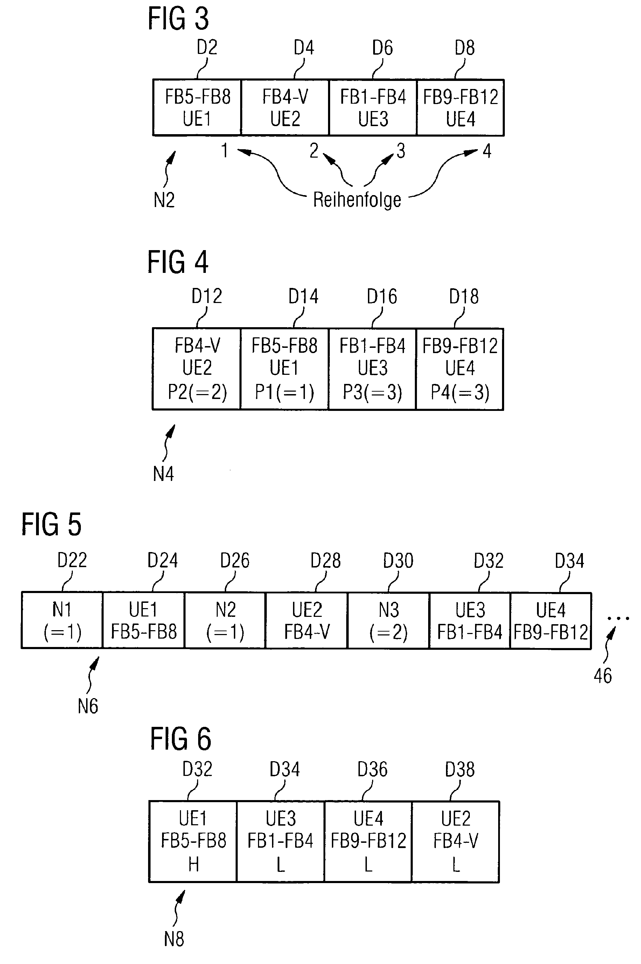

Bei einer anderen Weiterbildung des erfindungsgemäßen Verfahrens erzeugt die erste Datenübertragungsvorrichtung eine Nachricht, die Vorrangsdaten enthält, deren Wert den Vorrang angeben:
- beispielsweise die explizite Signalisierung einer Priorität mit dem Kanal,
- Festlegung von Prioritätsklassen, die Kanäle einer Klasse werden dann z. B. in der Reihenfolge der Klassen signalisiert. Vorteil ist, dass nur die Anzahl der Kanäle einer Klasse einmal pro Klasse signalisiert werden muss, nicht aber die Priorität für jeden einzelnen Kanal.
- Im einfachsten Fall werden beispielsweise nur zwei Klassen von lokalisierten Kanälen definiert, die priorisierten lokalisierten Kanäle und die nicht-priorisierten lokalisierten Kanäle. Verteilte Kanäle punktieren dann die nicht-priorisierten lokalisierten Kanäle, aber nicht die priorisierten lokalisierten Kanäle.
- Statt dessen können auch zwei Klassen für verteilte Kanäle eingeführt werden.
   Die soeben genannten Möglichkeiten werden unten anhand eines konkreten Ausführungsbeispiels mit Bezug auf die Figuren 3 bis 6 näher erläutert.

Bei einer nächsten alternativen Weiterbildung des erfindungsgemäßen Verfahrens erzeugt die erste Datenübertragungsvorrichtung eine Nachricht, die zumindest für einen Frequenzbereich den Vorrang einer ersten Zuordnungsart von Frequenzen zu Datenübertragungskanälen angibt, und die vorzugsweise für mindestens einen weiteren Frequenzbereich den Vorrang einer zweiten Zuordnungsart von Frequenzen zu Datenübertragungskanälen angibt. Jedoch kann es genügen, wenn nur der Vorrang einer Zuordnungsart signalisiert wird, wobei dann den nicht genannten Frequenzbereichen beispielsweise der Vorrang der anderen Zuordnungsart zugeordnet wird. Die Zuordnungsart ist beispielsweise entweder "lokalisierte Kanäle" oder "verteilte Kanäle".

Die letztgenannte Weiterbildung lässt sich auch über die Reihenfolge der Angabe der Frequenzbereiche signalisieren. Dies ist ebenfalls unten anhand eines Ausführungsbeispiels näher erläutert.

Bei einer anderen Weiterbildung ist dem ersten Datenübertragungskanal ein erster Frequenzbereich zugeordnet, wobei der erste Frequenzbereich mindestens zwei Teilbereiche umfasst. Zwischen den Teilbereichen liegt ein Zwischenfrequenzbereich, der bspw. eine mindestens doppelt so große Breite oder mindestens fünf mal so große Breite wie einer der Teilbereiche hat. Damit handelt es sich bei dem ersten Datenübertragungskanal um einen so genannten verteilten Datenübertragungskanal. Die Teilbereiche sind vorzugsweise gleich groß.

Bei einer nächsten Weiterbildung ist dem zweiten Datenübertragungskanal ein zweiter Frequenzbereich zugeordnet. Der zweite Frequenzbereich ist mindestens doppelt so breit oder mindestens fünf mal so breit wie ein Teilbereich des ersten Frequenzbereichs. Damit handelt es sich bei dem zweiten Datenübertragungskanal um einen so genannten "lokalisierten" Kanal, d. h. um einen Kanal, der in mehreren aufeinander folgenden Zeitschlitzen, z. B. in mehr als zwei aufeinander folgenden Zeitschlitzen oder in mehr als drei aufeinander folgenden Zeitschlitzen, im gleichen Frequenzbereich liegt. Einschränkungen ergeben sich gegebenenfalls nur durch Aussparungen von Frequenzen, die durch den Vorrang von Frequenzen für verteilte Datenübertragungskanäle entstehen.

Bei einer nächsten Weiterbildung ist der Frequenzbereich mit Vorrang nur ein Teilbereich des zweiten Datenübertragungskanals, d. h. des lokalisierten Datenübertragungskanals. Ein anderer Teilbereich dieses Datenübertragungskanals hat also keinen Vorrang. Damit kann das Verfahren noch flexibler ausgestaltet werden.

Bei einer nächsten Weiterbildung werden in den Datenübertragungskanälen Daten gemäß einem Mehrfrequenzübertragungsverfahren übertragen. Vorzugsweise wird ein so genanntes OFDMA-Verfahren (Orthogonal Frequency Division Multiple Access) eingesetzt.

Bei einer nächsten Weiterbildung ändern sich die Frequenzbereiche des ersten Datenübertragungskanals bzw. des zweiten Datenübertragungskanals zwischen mindestens drei aufeinander folgenden Zeitschlitzen eines Zeitrahmens jeweils. Somit unterscheidet sich diese Änderung von Änderungen, die gegebenenfalls zwischen zwei Zeitrahmen auftreten oder die einem Wechsel innerhalb eines Zeitrahmens entsprechen. Der sogenannte verteilte Kanal wird nicht in jedem Zeitschlitz auf die gleiche Art und Weise verteilt, sondern auf eine andere Art und Weise als im vorhergehenden Zeitschlitz. Durch diese Maßnahme kann der Empfang verbessert werden, weil noch größere Frequenzdiversität erreicht wird.

Bei einer nächsten Weiterbildung wird das erfindungsgemäße Verfahren oder eine seiner Weiterbildungen im Rahmen eines UMTS-Verfahrens (Universal Mobile Telecommunications System) durchgeführt, insbesondere gemäß Release 3, 4 oder 5. Auch weiterentwickelte UMTS-Verfahren sind davon erfasst, beispielsweise E-UTRA (Evolved-UMTS Terrestrial Radio Access). Insbesondere sind die Verfahren für die sogenannte Abwärtsrichtung (Downlink) geeignet, d. h. in der Richtung von einer Basisstation zu einem Mobilfunkgerät. Jedoch lassen sich die Verfahren unter Umständen auch in der entgegengesetzten Aufwärtsrichtung (Uplink) vorteilhaft einsetzen.

Bei einer Weiterbildung wird eine Vorrangregel festgelegt, die angibt, wie zu verfahren ist, wenn in einem Frequenzbereich eine Kollision eines verteilten Kanals und eines lokalisierten Allokationen mit gleicher Priorität auftritt. Vorzugsweise hängt auch diese Vorrangsregel von der Priorität der beiden kollidierenden Datenüberragungskanäle ab.

Ein weiterer Aspekt der Erfindung betrifft ebenfalls ein Verfahren zur Datenübertragung gemäß einem Frequenzmultiplexverfahren. Die Verfahren beider Aspekte hängen technisch sehr eng zusammen, weil sie sich auf die gleiche oben genannte Aufgabe beziehen. Bei dem Verfahren gemäß dem zweitem Aspekt wird in einer Datenübertragungsrichtung ein Allokationsschema bzw. eine Allokationsvorschrift vermerkt, das Prioritäten von lokalisierten Kanälen im Vergleich zu verteilten Kanälen bzw. in umgekehrter Richtung berücksichtigt. Das Allokationsschema enthält insbesondere einen ersten Datenübertragungskanal, der verteilt ist, einen zweiten Datenübertragungskanal, der lokalisiert ist, und der von dem ersten Datenübertragungskanal mit Aussparungen versehen wird. Das bedeutet, dass hier die Priorität des verteilten Kanals höher ist. Außerdem gibt es einen dritten Datenübertragungskanal, der ebenfalls lokalisiert ist, der jedoch nicht von dem ersten verteilten Datenübertragungskanal ausgespart wird und vorzugsweise auch nicht von einem anderen verteilten Kanal.

Das Allokationsschema lässt sich in den Datenübertragungsvorrichtungen in einer Schaltungsanordnung fest "verdrahten" bzw. vorgeben. Alternativ werden die das Allokationsschema beschreibenden Daten in einem Speicher gespeichert. Ein Mikroprozessor oder ein anderer Prozessor hat Zugriff auf diesen Speicher, um das Allokationsschema zu berücksichtigen.

Vorteile ergeben sich bereits, wenn nur ein Allokationsschema vorgegeben wird, dessen Datenübertragungskanäle dann variabel Nutzer bzw. Nutzerendgeräte bzw. bestimmte Dienste in diesen Endgeräten zugeordnet werden. Die Flexibilität lässt sich erhöhen, wenn mehrere Allokationsschemata berücksichtigt werden können, was voraussetzt dass mehrere Allokationsschemata z. B. zumindest in der Basisstation gespeichert sind.

Bei einer weiteren Weiterbildung, die für beide Aspekte gilt, wird ein Verfahren oder ein System angewendet, welches Mehrträgerverfahren mit räumlicher Ressourcenwiederverwendung durch Mehrantennenprozessierung kombiniert (MIMO, Multiple Input Multiple Output). Wird eine Frequenzressource vom selben Benutzer mehrfach durch räumliche Trennung wieder verwendet, handelt es sich um räumliches Multiplexen, bzw. um räumliches Diversität (Diversity); im Falle der gemeinsamen Verwendung einer Ressource von verschiedenen Nutzern spricht man von räumlichem Mehrfachzugriff. Jede Frequenzressource enthält somit mehrere räumliche Komponenten bzw. Schichten (spatial multiplexing). Die oben beschriebenen Verfahren können nun in einer Weise angewendet werden, dass der Vorrang für alle Schichten gemeinsam geregelt wird - alternativ kann aber der Vorrang auch pro Schicht nach obigen Verfahren geregelt werden.

Bspw. ist die Rangfolge der Frequenzbereiche für jede räumliche Komponente unabhängig von den Rangfolgen für die anderen Komponenten festgelegt.

Außerdem werden Vorrichtungen angegebenen, die insbesondere zur Durchführung der erfindungsgemäßen Verfahren bzw. ihrer Weiterbildungen geeignet sind. Somit gelten die oben genannten technischen Wirkungen auch für diese Vorrichtungen.

Im Folgenden werden Ausführungsbeispiele der Erfindung anhand der beiliegenden Zeichnungen erläutert. Darin zeigen:
- Figur 1: ein Mobilfunknetz,
- Figur 2: ein Allokationsschema,
- Figuren 3 bis 7: Nachrichten zur Allokation, und
- Figur 8: die Verwendung eines fest vorgegebenen Allokationsschemas.

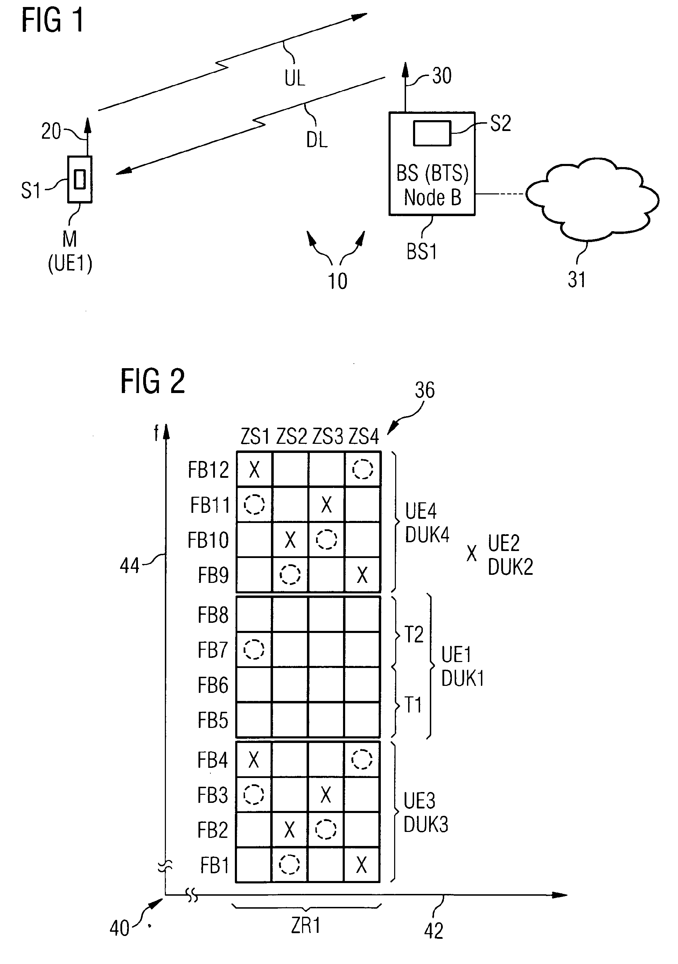

Figur 1 zeigt ein Mobilfunknetz, das auch als Mobilfunkdatenübertragungsnetz bzw. Mobilfunktelekommunikationsnetz bezeichnet werden kann. Das Mobilfunknetz 10 ist im Ausführungsbeispiel ein UMTS-Netz. Alternativ ist das Mobilfunknetz 10 ein Netz einer UMTS-Nachfolgetechnologie oder ein Netz der 4-ten Generation.

Das Mobilfunknetz 10 enthält eine Vielzahl von Basisstationen, die im Fall von UMTS auch als Node B bezeichnet werden. Im Folgenden wird jedoch auch im Fall von UMTS von Basisstation BS gesprochen. Außerdem enthält das Mobilfunknetz eine Vielzahl von mobilen Endgeräten, die als Mobilfunkgerät M oder alternativ UE (User Equipment, Benutzergerät) bezeichnet werden bzw. als Handy. In Figur 1 ist eine Basisstation BS und ein Mobilfunkgerät M1 bzw. UE1 dargestellt.

Das Mobilfunkgerät M1 enthält beispielsweise eine Antenne 20, die als Sendeantenne und auch als Empfangsantenne genutzt wird. Außerdem enthält das Mobilfunkgerät M1 eine Steuereinheit S1, die beispielsweise einen Mikroprozessor enthält oder nur eine Schaltung ohne Prozessor. Das Mobilfunkgerät M1 ist insbesondere geeignet, die unten anhand der Figuren 3 bis 7 erläuterten Nachrichten N2 bis N10 zu erzeugen bzw. zu empfangen sowie zu bearbeiten.

Die Basisstation BS1 enthält unter anderem eine Antenne 30, die als Sendeantenne und als Empfangsantenne genutzt wird. Außerdem enthält die Basisstation BS1 eine Steuereinheit S2, die einen oder mehrere Mikroprozessoren enthält bzw. eine Schaltungsanordnung, die ohne Programm arbeitet. Die Basisstation BS1 ist insbesondere in der Lage, die unten anhand der Figur 3 bis 7 erläuterten Nachrichten N2 bis N10 zu empfangen und zu bearbeiten bzw. zusammenzustellen und zu senden.

Von dem Mobilfunkgerät M1 zu der Basisstation BS1 gibt es eine sogenannte Uplink-Übertragungsrichtung UL. Außerdem gibt es eine sogenannte Downlink-Übertragungsrichtung DL, die von der Basisstation BS1 zu dem Mobilfunkgerät M1 bzw. UE1 gerichtet ist.

Die Datenübertragungskapazität auf dem Uplink UL und auf dem Downlink DL kann gleich sein oder voneinander verschieden, wobei in Downlinkrichtung oft ein Mehrfaches der Datenübertragungskapazität zur Verfügung steht als in Uplinkrichtung UL.

In Figur 1 ist außerdem eine Verbindung zu einem Datenübertragungsnetz 31 dargestellt, mit dem die Basisstation BS1 verbunden ist. Das Datenübertragungsnetz 31 dient zur Weiterleitung des Teilnehmerverkehrs sowie für Verwaltungs- und Administrationszwecke, die hier nicht weiter ausgeführt sind.

Figur 2 zeigt ein Allokationsschema 36, das erst während des Netzbetriebs festgelegt wird, beispielsweise abhängig von sich ändernden Übertragungsbedingungen oder abhängig von der Menge der zu übertragenden Daten zwischen der Basisstation BS1 und dem Mobilfunkgerät M1 bzw. in umgekehrter Richtung.

Das Allokationsschema 36 ist in einem Koordinatensystem 40 dargestellt. Das Koordinatensystem enthält eine x-Achse 42, auf der die Zeit t dargestellt ist. Insbesondere die Zeit, die für die Übertragung eines Zeitrahmens ZR1 zur Verfügung steht. Der Zeitrahmen wird beispielsweise jeweils durch Synchronisationsbits den Netzelementen angezeigt. Im Ausführungsbeispiel hat der Zeitrahmen ZR1 eine Dauer von 0,5 Millisekunden alternativ von 0,667 Millisekunden, so dass beispielsweise fünfzehn Zeitrahmen in einem übergeordneten Zeitrahmen von 10 Millisekunden angeordnet werden könnten. Alternativ kann ein Zeitrahmen ZR1 aber auch eine Länge von 0,2 ms oder 2 ms haben, bzw. eine variable oder beliebige Länge.

Das Koordinatensystem 40 hat eine γ-Achse 44, auf der die Frequenz f angegeben ist. Beispielsweise liegen Frequenzbereiche FB1 bis FB12 in einem Bereich, der für eine Mobilfunkübertragung zugelassen ist, beispielsweise im Bereich größer als 1,5 Gigahertz und jedoch kleiner als 2,5 Gigahertz, oder in Frequenzbändern zwischen 3,4 Gigahertz bis 4,2 Gigahertz, 4,5 Gigahertz bis 4,9 Gigahertz, sowie auch in Frequenzbändern niedriger als 1,5 Gigahertz. Die Frequenzbereiche FB1 bis FB12 sind im Ausführungsbeispiel gleich groß und enthalten beispielsweise jeweils nur eine Trägerfrequenz. Bei anderen Ausführungsbeispielen können diese Frequenzbereiche voneinander verschiedene Größe haben und/oder auch jeweils mehrere Trägerfrequenzen enthalten, beispielsweise 3 bis 10 Trägerfrequenzen, vorzugsweise beispielsweise 5 Trägerfrequenzen.

Die Basisstation BS1 ordnet die zur Verfügung stehenden Frequenzbereiche FB1 bis FB12 Nutzern mit Endgeräten UE1 bis UE4 auf die im Folgenden erläuterte Art und Weise zu. Dabei werden im Ausführungsbeispiel vier aufeinander folgende Zeitschlitze ZS1 bis ZS4 betrachtet. Bei anderen Ausführungsbeispielen gibt es jedoch eine abweichende Anzahl von Zeitschlitze in einem Zeitrahmen, beispielsweise ein, drei, oder sechs oder mehr als zehn Zeitschlitze. Vorzugsweise beträgt die Anzahl der Zeitschlitze je Zeitrahmen jedoch weniger als beispielsweise 50. Je Zeitschlitz ZS1 bis ZS4 wird bspw. ein oder mehrere OFDM-Symbol(e) (Orthogonal Frequency Division Multiplex gesendet. Ein OFDM-Symbol sind dabei eine Anzahl von Bits, z. B., die ein Wertepaar bilden, dass bspw. einer IFT (Inverse Fourier Transformation) vor dem Senden unterzogen wird.
Die Basisstation will bspw. den Frequenzbereich FB5 bis FB8 als lokalisierten Datenübertragungskanal DUK1 dem Nutzerendgerät UE1 zuordnen. Deshalb wird beim ersten Ausführungsbeispiel dem Datenübertragungskanal DUK1 der größte Vorrang bzw. die höchste Priorität zugeordnet.

Einem Nutzerendgerät UE2 soll ein verteilter Datenübertragungskanal DUK2 zugeordnet werden. Deshalb belegt die Basisstation BS1 nach einem vorgegebenen Rechenschema Frequenzbereiche für den Datenübertragungskanal DUK2, wobei zwischen diesen Frequenzbereichen größere Zwischenräume liegen, siehe beispielsweise im Zeitschlitz ZS1 Frequenzbereich FB4 und Frequenzbereich FB12, die durch ein Kreuz gekennzeichnet sind, das den Datenübertragungskanal DUK2 markiert. Das Rechenschema wird beispielsweise unter Verwendung der Modulofunktion vorgegeben, die genaue Zuordnungsfunktion ist aber für die vorliegende Erfindung unerheblich. So liegen in einem Zeitschlitz ZS2 der Datenübertragungskanal DUK2 im Frequenzbereich FB2 und im Frequenzbereich FB10. Im Zeitschlitz ZS3 liegt der Datenübertragungskanal dagegen im Frequenzbereich FB3 und im Frequenzbereich FB11. Im Zeitschlitz ZS4 liegt der Datenübertragungskanal DUK2 im Frequenzbereich FB1 und FB9.

Außerdem übergibt die Basisstation BS1 mit einer geringeren Priorität als die Priorität des Datenübertragungskanals DUK2 einen Datenübertragungskanal DUK3 an das Endgerät UE3. Der Datenübertragungskanal DUK3 ist zwar ein lokalisierter Datenübertragungskanal im Frequenzbereich FB1 bis FB4, darf jedoch von verteilten Datenübertragungskanälen genutzt bzw. ausgespart bzw. "punktiert" werden, siehe beispielsweise im Zeitschlitz ZS1 Verwendung des Frequenzbereichs FB4 für den Datenübertragungskanal DUK2.

Der Datenübertragungskanal DUK4 liegt im Frequenzbereich FB9 bis FB12 und ist damit ebenfalls ein lokalisierter Datenübertragungskanal, der jedoch ebenfalls wieder durch verteilte Datenübertragungskanäle "punktiert" bzw. ausgespart werden kann, beispielsweise Zeitschlitz ZS1, Frequenzbereich FB12.

Die Festlegung des Allokationsschemas 36 durch die Basisstation BS1 wird im Ausführungsbeispiel an alle Mobilfunkgeräte M1, usw. in der betrachteten Zelle des Mobilfunknetzes 10 signalisiert, wobei auch Prioritäten bzw. Vorrangsregeln beachtet werden. Dies verkürzt die zu übertragende Datenmenge. Die zur Signalisierung als Alternativen genutzten Nachrichten N2 bis N10 werden unten anhand der Figuren 3 bis 7 näher erläutert. Jedes Endgerät M1 bzw. UE1 kennt dann alle Prioritäten sowie auch seine eigene Priorität und kann somit bestimmen, ob es bestimmten Frequenzbereiche, die von anderen Geräten genutzt werden, Vorrang gewähren muss oder ob es selbst Vorrang hat. Somit lassen sich Kollisionen auf einfache Art und Weise verhindern bzw. auflösen.

Bei einem anderen Ausführungsbeispiel sind die verteilten Datenübertragungskanäle beispielsweise nach einem anderen Schema verteilt, als in Figur 2 dargestellt.

Vor und auch nach dem Zeitrahmen ZR1 werden weitere Zeitrahmen übertragen, die bspw. einen ähnlichen Aufbau wie der Zeitrahmen ZR1 haben, ggf. jedoch mit anderen Allokationsschemata, für die gleichen Endgeräte oder auch für andere Endgeräte.

Figur 3 zeigt eine Nachricht N2, die vier aufeinander folgende Datenfelder D2 bis D8 enthält:
- das Datenfeld D2 gibt einen Allokationsbereich, nämlich den Frequenzbereich FB5 bis FB8 an, sowie ein Kennzeichen des Nutzerendgerätes UE1. Damit ist festgelegt, dass das Nutzerendgerät UE1 den Frequenzbereich FB5 bis FB8 nutzen soll. Weil das Datenfeld D2 an der ersten Stelle der Reihenfolge der Datenfelder D2 bis D8 steht, hat das Nutzerendgerät UE1 die höchste Priorität und damit vor allen anderen Nutzerendgeräten Vorrang.
- Im Datenfeld D4 ist angegeben, dass das Nutzerendgerät UE2 einen verteilten Datenübertragungskanal nutzen soll, was beispielsweise durch ein Kennzeichen, hier "V", angegeben wird. Die Startfrequenz zur Berechnung der zu nutzenden Frequenzbereiche ist ebenfalls angegeben, nämlich der Frequenzbereich FB4. Alternativ wird beispielsweise nur der Startfrequenzbereich FB4 im Datenfeld D4 angegeben. Gegebenenfalls können zusätzliche Informationen, welche die genaue Ausgestaltung des verteilten Datenübertragungskanals beschreiben angegeben sein. Weil das Nutzerendgerät UE1 bzw. dessen zu nutzender Frequenzbereich im zweiten Datenfeld D4 der Reihenfolge angegeben ist, hat es die zweithöchste Priorität, die unter der Priorität des Endgerätes UE1 liegt. Die Priorität des Endgerätes UE2 ist aber höher als die Priorität der Endgeräte in den folgenden Datenfeldern D6, D8.
- Im Datenfeld D6 ist angegeben, dass dem Endgerät UE3 der Frequenzbereich FB1 bis FB4 zugeordnet ist. Weil das Datenfeld D6 das dritte Datenfeld in der Reihenfolge ist, wird dem Endgerät UE3 die dritthöchste Priorität zugeordnet, die somit unter der Priorität des Endgerätes UE2 liegt, jedoch über der Priorität des Endgerätes UE4.
- Im Datenfeld D8 ist angegeben, dass das Nutzerendgerät UE4 den Frequenzbereich FB9 bis FB12 nutzen soll, d. h. den lokalisierten Datenübertragungskanal DUK4. Dieses Endgerät hat somit die geringste Priorität.

Bei anderen Ausführungsbeispielen werden beispielsweise die Nutzerendgeräte UE1 bis UE4 mit der kleinsten Priorität vor Benutzerendgeräten UE1 bis UE4 mit höherer Priorität in der Reihenfolge angegeben. Ebenso lässt sich die Reihenfolge vertauschen, in der das Endgerätekennzeichen UE1 und der zugeordnete Frequenzbereich in einem Datenfeld D2 bis D8 angegeben ist.

Figur 4 zeigt eine alternative Nachricht N4, die ebenfalls vier Datenfelder D12 bis D18 enthält. Das Datenfeld D12 enthält die folgenden Angaben:
- Frequenzbereich FB4 und Kennzeichen "V", so dass ein verteilter Datenübertragungskanal DUK2 angegeben ist,
- Kennzeichen des Endgerätes UE2, und
- Prioritätsdatum P2, das im Ausführungsbeispiel den Wert 2 hat, um die zweithöchste Priorität anzugeben. Alternativ lassen sich jedoch auch andere Werte zur Angabe der Priorität verwenden.

Das dem Datenfeld D12 in der Nachricht N4 folgende Datenfeld D14 enthält die folgenden Angaben:
- zu nutzender Frequenzbereich FB5 bis FB8,
- Nutzergerätkennzeichen UE1, und
- Prioritätsdatum P1 mit dem Wert 1, um anzugeben, dass das Endgerät UE1 die höchste Priorität hat.

Das dem Datenfeld D14 folgende Datenfeld D16 enthält die folgenden Angaben:
- zu nutzender Frequenzbereich FB1 bis FB4, d. h. ein lokalisierter Frequenzbereich,
- Kennzeichen des betroffenen Nutzerendgerätes UE3, und
- Prioritätsdatum P3, das im Ausführungsbeispiel den Wert 3 hat, um anzugeben, dass das Nutzerendgerät UE3 eine kleinere Priorität als die anderen Endgeräte UE1 und UE2 hat.

Das letzte Datenfeld D18 der Nachricht N4 enthält die folgenden Angaben:
- zu nutzender Frequenzbereich FB9 bis FB12,
- durch das Datenfeld D18 betroffenes Endgerät, hier das Endgerät UE4, und
- Prioritätsdatum P4, das im Ausführungsbeispiel ebenfalls den Wert 3 oder alternativ den Wert 4 hat.

Die Reihenfolge der Datenfelder D12 bis D18 steht damit in keinem Zusammenhang zu dem Vorrang bzw. der Priorität bestimmter Datenübertragungskanäle. Beispielsweise wird die Reihenfolge der Endgeräte in den Datenfeldern D12 bis D18 durch die Reihenfolge bestimmt, in der sich die Endgeräte UE1 bis UE4 bei der Basisstation BS1 angemeldet haben. Dieses Ausführungsbeispiel hat den Vorteil, dass die Reihenfolge nicht durch die Prioritäten vorgegeben ist, somit lässt sich die Reihenfolge verwenden, um andere Eigenschaften oder Informationen für die Übertragungen zu signalisieren.
Bei anderen Ausführungsbeispielen ist die Reihenfolge der Daten in den betreffenden Datenfeldern D12, D14, D16 bzw. D18 von der angegebenen Reihenfolge verschieden. Außerdem können die Datenfelder D12 bis D18 weitere Daten enthalten.

Figur 5 zeigt eine Nachricht N6, die sieben Datenfelder D22 bis D34 enthält. In der Nachricht N6 wird die Priorität wiederum durch die Reihenfolge bestimmt, wobei Prioritätsklassen gebildet worden sind. In der Nachricht N6 ist angegeben, wie viele Endgeräte jeweils zu einer Prioritätsklasse gehören. Im Einzelnen gilt für das Datenfeld D22:
- es enthält ein Datum N1, das angibt, dass der ersten Klasse, d. h. der Klasse mit der höchsten Priorität im Beispiel genau ein Endgerät zugeordnet ist.

Dieses Endgerät wird im Datenfeld D24 näher angegeben, wobei das Datenfeld D24 die folgenden Daten enthält:
- ein Kennzeichen für das Nutzerendgerät UE1,
- sowie eine Angabe des diesem Endgerät UE1 zugeordneten Frequenzbereichs FB5 bis FB8.

Nach dem Datenfeld D24 folgt das Datenfeld D26, in dem ein Datum N2 gleich 1 angibt, dass zu der nächsten Klasse, d. h. zu der Klasse, die die nächst niedrigere Priorität angibt, ebenfalls ein Endgerät gehört. Dieses Endgerät ist im folgenden Datenfeld 28 angegeben. Das Datenfeld 28 enthält:
- ein Kennzeichen für das Nutzerendgerät UE2, und
- eine Angabe zum zu verwendenden lokalisierten Datenübertragungskanal DUK2, beispielsweise die Angabe des Startpunktes SB4 und einen Hinweis auf einen verteilten Datenübertragungskanal, hier "V".

Dem Datenfeld D28 folgt ein Datenfeld D30, in dem durch ein Datum N3 mit dem Wert 2 angegeben ist, dass der nächsten Klasse zwei Endgeräte zugeordnet sind, wobei die nächste Klasse aufgrund der letzten Position in der Reihenfolge auch eine geringere Priorität hat als die vorigen Klassen. In dem dem Datenfeld D30 folgenden Datenfeld D32 sind die folgenden Angaben enthalten:
- ein Kennzeichen für das Nutzerendgerät UE3, und
- der dem Endgerät UE3 zugeordnete Frequenzbereich FB1 bis FB4.

Dem Datenfeld D32 folgt unmittelbar das Datenfeld D34. Das Datenfeld D34 enthält die folgenden Angaben:
- ein Kennzeichen für das betroffene Nutzerendgerät UE4, und
- der dem Endgerät UE4 zugeordnete Frequenzbereich FB9 bis FB12.

Optional enthält die Nachricht N6 weitere Daten, siehe Pfeil 46. Dabei kann es sich wieder um Datenfelder handeln, die Allokationen für Nutzerendgeräte enthalten, die dann einer letzten Klasse mit geringster Priorität zugeordnet sind. Es ist somit für die letzte Klasse nicht zwingend notwendig, die Anzahl der zugeordneten Endgeräte mitzuteilen.

Figur 6 zeigt eine Nachricht N8, die die Datenfelder D32 bis D38 enthält. Es wurden nur zwei Prioritäten festgelegt, nämlich eine hohe Priorität H und eine niedrigere Priorität L. Dennoch lässt sich auch mit der Nachricht N8 das Allokationsschema 36 signalisieren. So enthält das Datenfeld D32 die folgenden Angaben:
- ein Kennzeichen für das durch das Datenfeld 32 betroffene Nutzerendgerät UE1,
- der dem Nutzerendgerät UE1 zugeordnete Frequenzbereich FB5 bis FB8, und
- ein Prioritätsdatum mit dem Wert "H", d. h. einem Wert, der eine hohe Priorität angibt.

Dem Datenfeld D32 folgt ein Datenfeld D34. Das Datenfeld D34 enthält die folgenden Angaben:
- ein Kennzeichen für das durch das Datenfeld D34 betroffenes Nutzerendgerät, nämlich Nutzerendgerät UE3,
- der dem Nutzerendgerät UE3 zugeordnete Frequenzbereich FB1 bis FB4, und
- die diesem Frequenzbereich zugeordnete Priorität, im Ausführungsbeispiel die Priorität L, d. h. die niedrigere bzw. kleinere Priorität.

Dem Datenfeld D34 folgt ein Datenfeld D36, das die folgenden Angaben enthält:
- Kennzeichen für das betroffene Nutzerendgerät UE4,
- zu nutzender Frequenzbereich FB9 bis FB12, und
- zugehörige Priorität, im Ausführungsbeispiel die geringere Priorität L.

Im letzten Datenfeld D38 der Nachricht N8 sind die folgenden Angaben enthalten:
- ein Kennzeichen UE2 für das Nutzerendgerät UE2,
- der zu nutzende Frequenzbereich FB4-"V", und
- ein Prioritätsdatum, das die Priorität des Nutzerendgerätes UE2 bzw. des Frequenzbereichs FB4-"V" angibt, im Ausführungsbeispiel eine kleine Priorität L.

Damit ist die Reihenfolge der Datenfelder D32 bis D38 für den Vorrang bzw. für die Priorität nicht erheblich. Dies steht im Gegensatz zu beispielsweise den Fällen der Nachricht N2, siehe Figur 3, bzw. der Nachricht N6, siehe Figur 5, wobei insbesondere in der Nachricht N6 ebenfalls explizite Prioritätsangaben enthalten sein könnten, bspw. um die Priorität innerhalb einer Klasse weiter abzustufen. Bei diesem Ausführungsbeispiel und entsprechend auch bei anderen mit expliziten Prioritätsangaben kann weiterhin festgelegt werden wie zu verfahren ist, wenn in einem Frequenzbereich eine Kollision von verteilten und lokalisierten Allokationen mit gleicher Priorität auftritt. Mann kann dazu vorab festlegen, welche Allokation in diesem Spezialfall Vorrang hat. Diese Vorrangregelung kann weiterhin von der Priorität abhängen, beispielsweise kann bei einer Priorität L die verteilte und bei der Priorität H die lokalisierte Allokation Vorrang genießen.

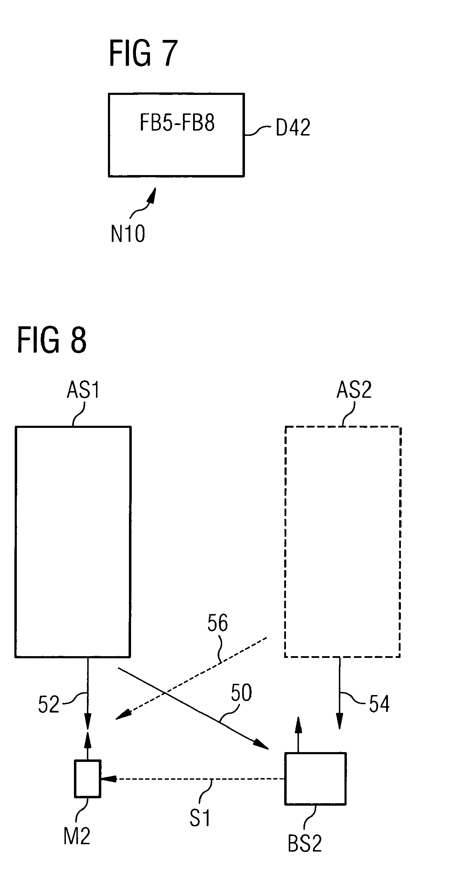

Figur 7 zeigt eine Nachricht N10.
Für in einem Datenfeld D42 angegebenen Frequenzbereich FB5 bis FB8 gilt die Regel, dass lokalisierte Allokationen Vorrang genießen, wohingegen ansonsten verteilte Allokationen Vorrang haben. Es kann in diesem Ausführungsbeispiel also geschehen, dass in einem ersten Frequenzbereich ein erster Nutzer mit lokalisierter Allokation Vorrang hat vor einem zweiten Nutzer mir verteilter Allokation, wohingegen in einem zweiten Frequenzbereich der selbe erste Nutzer keinen Vorrang vor eben diesem zweiten Nutzer hat. In dieser Hinsicht ist dieses Ausführungsbeispiel also allgemeiner als die vorherigen.

Alle Nachrichten N2 bis N10 können gegebenenfalls Zusatzdatenfelder enthalten, z. B. Daten, die für die Weiterbearbeitung der Nutzdaten, wie Musikdaten, Sprachdaten oder Bilddaten, benötigt werden, wie Information zur Kodierung (z. B. Kodierungsart, Kodierungsrate) bzw. zum Modulationsverfahren (z. B. QPSK (Quadrature Phase Shift Keying, n-QAM (Quadrature Amplitude Modulation), wobei n eine natürliche Zahl größer als 4 bezeichnet) Auch werden bei anderen Ausführungsbeispielen die in den Nachrichten N2 bis N10 jeweils enthaltenen Angaben in mehreren aufeinander folgenden Nachrichten gesendet.

Bei mehreren Nachrichten kann die Priorisierung auch dadurch ausgedrückt werden, in welcher Nachricht die Allokation übertragen wird. Beispielsweise können alle Allokationen in der ersten Nachricht eine höhere Priorisierung erhalten, als die Übertragungen in nachfolgenden Nachrichten. Innerhalb einer Nachricht kann dabei die Priorisierung wie in den anderen Ausführungsbeispielen dargestellt vorgenommen werden. Analog können die in einer zweiten Nachricht übertragenen Allokationen eine höhere Priorität haben, als die in einer dritten Nachricht und so weiter. Dabei muss die Ordnung der Nachrichten nicht zeitlich erfolgen (erste und zweite Nachricht können auch gleichzeitig übertragen werden) sondern kann anhand eines beliebigen Ordnungsverfahrens bzw. Ordnungskriteriums festgelegt werden, z. B. über die Frequenz auf der die entsprechende Nachricht übertragen wird - z.B. Nachrichten die größere Prioritäten angeben auf größeren Frequenzen als Nachrichten, die kleinere Prioritäten angeben.

Dieses Verfahren ist insbesondere dann sinnvoll, wenn die einzelnen Mobilstationen sich in unterschiedlicher Entfernung oder Abschattung oder Interferenz usw. von der Basisstation befinden. Dann müssen nämlich Nachrichten, die auch die entfernten Mobilstationen erreichen sollen mit viel höherer Leistung, alternativ mit besserem Fehlerschutz, robusterem Modulationsverfahren etc., ausgesendet werden, als Nachrichten für näher befindliche Mobilstationen.

Es ist dann z. B. vorteilhaft, mehrere Nachrichten zu bilden und nur diejenigen, die für entfernte Mobilstationen bestimmt sind, mit höchster Leistung zu senden, die anderen aber mit entsprechend niedriger Leistung. Das führt insgesamt zu einer besseren Effizienz.

Es ist dann den nahe liegenden Mobilstationen möglich, auch die für die entfernten Mobilstationen bestimmten Nachrichten zu empfangen, nicht aber umgekehrt. In einem solchen Fall sollten daher die Nachrichten, die mit der höchsten Leistung gesendet werden, auch die höchste Priorität für die Allokation erhalten. Nachrichten, die mit geringerer Leistung gesendet werden erhalten eine entsprechend niedrigere Priorität. Zur korrekten Bestimmung der eigenen Allokation sollte eine Mobilstation nämlich nur die Nachrichten empfangen können, die die eigene Allokation enthalten sowie solche, die eine höhere Priorität enthalten, weil nur diese die eigene Allokation punktieren können. Nachrichten mit Allokationen niedrigerer Priorität haben hingegen keinen Einfluss und sollten daher auch nicht empfangen werden bzw. empfangen werden können und können somit mit niedrigerer Leistung übertragen werden. Somit erlaubt eine solche Konvention bei der Zuordnung der Prioritäten eine Leistungseinsparung bei der Ressourcen Signalisierung.

Die Nachrichten N2 bis N10 lassen sich beispielsweise in einem Steuerkanal übertragen, der an bekannten Bitpositionen bzw. Symbolpositionen übertragen wird bzw. dessen Positionen in geeigneter Weise den Endgeräten bekannt sind oder gemacht werden.

Figur 8 zeigt die Verwendung von fest vorgegebenen Allokationsschemata AS1 und optional AS2. Bei diesen Allokationsschemata AS1 bzw. auch AS2 werden die Nutzer, bzw. genauer einzelnen Endgeräte bzw. von den Endgeräten genutzte Dienste, zu vorgegebenen Datenübertragungskanälen zugeordnet. Beispielsweise könnte das Allokationsschema AS1 dem Allokationsschema 36 entsprechen. Das Allokationsschema AS1 wird in einer Basisstation BS2 hinterlegt, beispielsweise fest verdrahtet oder in einem Speicher. Die Basisstation BS2 überträgt bei einer ersten Variante das Allokationsschema AS1 an ein Mobilfunkgerät M2, siehe Signalisierung SI. Bei einer anderen Variante wird das Allokationsschema AS1 in dem Mobilfunkgerät M2 gespeichert oder fest verdrahtet, siehe Pfeil 52. Somit wird in der Basisstation BS2 sowie ggf. auch in den Mobilfunkgeräten M2 usw. das Allokationsschema AS1, bzw. auch AS2 vor dem Zuordnen der Ressourcen zu Endgeräten gespeichert.

Während des Netzbetriebs ordnet die Basisstation BS2 den Datenübertragungskanälen DUK1 bis DUK4, siehe Figur 2, bestimmte Endgeräte UE1 bis UE4 zu, was jedoch auch abweichend von der in Figur 2 gezeigten Darstellung sein kann. Die Zuordnung wird dem jeweiligen Endgerät signalisiert, siehe Signalisierung SI.

Bei einem anderen Ausführungsbeispiel gibt es zwei voneinander verschiedene Allokationsschemata AS1 und AS2. Beide Allokationsschemata AS1 und AS2 werden beispielsweise nur in der Basisstation BS2 gespeichert bei einer ersten Variante. Bei einer zweiten Variante werden die Allokationsschemata AS1 und AS2 sowohl in der Basisstation BS2 als auch in dem Mobilfunkgerät M2 gespeichert bzw. verdrahtet. Bei der ersten Variante signalisiert die Basisstation BS2 das aktuelle Allokationsschema AS1 bzw. AS2 an die Endgeräte, siehe Signalisierung SI.

Wenn zwei Allokationsschemata AS1 und AS2 verwendet werden, signalisiert die Basisstation BS2 zumindest einem Endgerät M2, welches Allokationsschema ausgewählt werden soll, siehe Signalisierung SI. Dies kann bspw. durch Übermitteln des aktuellen Allokationsschemas AS1 bzw. AS2 erfolgen. Alternativ wird jedoch nicht das Allokationsschema sondern nur ein Auswahldatum übermittelt, das eines der Allokationsschemata kennzeichnet. Danach signalisiert die Basisstation BS2 die Zuordnung von Endgeräten zu den nun wieder starr vorgegebenen Datenübertragungskanälen DUK1 bis DUK4.

Damit gilt bezüglich der Figur 8, dass vor der Zuteilung insbesondere auch Frequenzbereiche definiert werden, die nicht durch verteilte Kanäle verwendet werden dürfen. Bei der Zuteilung der verteilten Kanäle werden diese Bereiche dann ausgespart. Ein lokalisierter Kanal kann aber durchaus noch diesem Bereich zugeordnet werden und ist zumindest in diesem Bereich dann gegen eine Punktierung durch einen verteilten Kanal geschützt. Ein Vorteil dieses Verfahrens ist, dass es einfache Signalisierungsnachrichten nutzen kann.

Insbesondere kann es geschehen, dass ein lokalisierter Kanal in einem Teilbereich gegen Punktierung geschützt ist und in einem anderen Teilbereich aber nicht, siehe Figur 2 gestrichelte Kreise, wobei ein Teilbereich T1 des Datenübertragungskanals DUK1 von einer Punktierung geschützt ist, während der verbleibende Teilbereich T2 des Datenübertragungskanals DUK1 durchaus punktiert werden kann, siehe Kreis im Zeitschlitz ZS1, Frequenzbereich FB7. Insbesondere kann jedoch auch in diesem Teilbereich T2 noch die Punktierung durch lokalisierte Kanäle mit niedrigerem Vorrang bzw. mit niedriger Priorität ausgeschlossen werden, so dass im Ausführungsbeispiel im Frequenzbereich FB7 und FB8 keine Kreuze enthalten sind, die Aussparungen für den Datenübertragungskanal DUK2 darstellen.

Die Verwendung von Teilbereichen T1 ist auch möglich, wenn die Schemata nicht starr sondern dynamisch vorgegeben werden, siehe Schema 36. In diesem Fall gibt es dann beispielsweise zwei Datenfelder, die den Datenübertragungskanal DUK1 beschreiben, wobei die Priorität in beiden Datenfeldern voneinander verschieden ist.

### Bezugszeichenliste

- 10: Mobilfunknetz
- M1, M2: Mobilfunkgerät
- 20: Antenne
- UL: Uplink
- DL: Downlink
- BS1, BS2: Basisstation
- 30: Antenne
- 31: Datenübertragungsnetz
- 36: Allokationsschema
- 40: Koordinatensystem
- 42: x-Achse
- 44: y-Achse
- 46: Reihe
- ZR1: Zeitrahmen
- FB1 bis FB12: Frequenzbereich
- UE1 bis UE4: Endgerät
- DUK1 bis DUK4: Datenübertragungskanal
- N2 bis N10: Nachricht
- D2 bis D44: Datenfeld
- T1, T2: Teilbereich
- S1, S2: Steuereinheit
- AS1, AS2: Allokationsschemadaten
- SI: Signalisierung
- 50 bis 56: Pfeil

## Patentansprüche

1. Verfahren zur Datenübertragung zur Ressourcenallokation gemäß einem Frequenzmultiplexverfahren,
mit dem Schritt:
Versenden oder Empfangen mit einer Datenübertragungsvorrichtung (M1, BS1) mindestens eines Datums (N2 bis N8), das eine Rangfolge angibt, gemäß der ein erster Datenübertragungskanal (DUK1, DUK2) in einem Frequenzbereich Vorrang vor einem zweiten Datenübertragungskanal (DUK2, DUK1) hat.

2. Verfahren nach Anspruch 1, **dadurch gekennzeichnet, dass** die Datenübertragungsvorrichtung (M1, BS1) eine Nachricht (N2, N6) erzeugt, in der die Reihenfolge von Daten (D2 bis D8) die Rangfolge angibt.

3. Verfahren nach Anspruch 1, **dadurch gekennzeichnet, dass** die Datenübertragungsvorrichtung (M1, BS1) mehrere Nachrichten erzeugt,
wobei die Rangfolge von einem für diese Nachrichten festgelegten Ordnungsverfahren abhängt.

4. Verfahren nach Anspruch 3, **dadurch gekennzeichnet, dass** das Ordnungsverfahren die zeitliche Reihenfolge betrifft, in der die Nachrichten gesendet werden,
oder dass das Ordnungsverfahren die Frequenzen betrifft, auf denen die Nachrichten gesendet werden,
oder dass das Ordnungsverfahren die Sendeleistungen betrifft, mit denen die Nachrichten gesendet werden,
oder dass das Ordnungsverfahren die Stärken oder Arten der Fehlerkodierungen betrifft, mit denen die Nachrichten gegen Übertragungsfehler kodiert werden,
dass das Ordnungsverfahren die Modulationsverfahren betrifft, mit denen die Nachrichten gesendet werden, oder
dass die Ordnung signalisiert wird.

5. Verfahren nach Anspruch 1, **dadurch gekennzeichnet, dass** die erste Datenübertragungsvorrichtung (M1, BS1) mindestens eine Nachricht (N4, N8) erzeugt, die Vorrangsdaten (P2, H) enthält, deren Wert den Vorrang angibt.

6. Verfahren nach Anspruch 1, **dadurch gekennzeichnet, dass** die Datenübertragungsvorrichtung mindestens eine Nachricht (N10) erzeugt, die für mindestens einen Frequenzbereich (FB5) den Vorrang einer ersten Zuordnungsart von Frequenzen zu Datenübertragungskanälen (DUK1 bis DUK4) angibt,
und die vorzugsweise für mindestens einen weiteren Frequenzbereich (FB1) den Vorrang einer zweiten Zuordnungsart von Frequenzen zu Datenübertragungskanälen (DUK1 bis DUK4) angibt.

7. Verfahren nach einem der vorhergehenden Ansprüche, **dadurch gekennzeichnet, dass** der erste Datenübertragungskanal (DUK2) ein verteilter Datenübertragungskanal (DUK2) ist und dass der zweite Datenübertragungskanal(DUK1) ein lokalisierter Datenübertragungskanal ist.

8. Verfahren nach einem der Ansprüche 1 bis 6, **dadurch gekennzeichnet, dass** dem ersten Datenübertragungskanal (DUK2) ein erster Frequenzbereich (FB4, FB12) zugeordnet ist,
wobei der erste Frequenzbereich mindestens zwei Teilbereiche (FB4, FB12) umfasst, zwischen denen ein Zwischenfrequenzbereich (FB5 bis FB11) liegt,
und dass dem zweiten Datenübertragungskanal (DUK1, DUK3) ein zweiter Frequenzbereich zugeordnet ist, wobei der zweite Frequenzbereich (FB5 bis FB8, FB1 bis FB4) mindestens doppelt so breit oder mindestens fünf mal so breit wie ein Teilbereich (FB4, FB12) des ersten Frequenzbereichs (FB4, FB12) ist.

9. Verfahren nach Anspruch 7 oder 8, **dadurch gekennzeichnet, dass** der Frequenzbereich mit Vorrang ein Teilbereich (T1) des zweiten Datenübertragungskanals (DUK1) ist.

10. Verfahren nach einem der vorhergehenden Ansprüche, **dadurch gekennzeichnet, dass** in den Datenübertragungskanälen (DUK1 bis DUK4) Daten gemäß einem Mehrfrequenzverfahren übertragen werden, insbesondere gemäß einem OFDMA-Verfahren.

11. Verfahren nach einem der vorhergehenden Ansprüche, **dadurch gekennzeichnet, dass** sich die Frequenzbereiche des ersten Datenübertragungskanals (DUK2) zwischen mindestens zwei oder zwischen mindestens drei aufeinander folgenden Zeitschlitzen (ZS1 bis ZS4) eines Zeitrahmens (ZR) jeweils ändern.

12. Verfahren nach einem der vorhergehenden Ansprüche, **dadurch gekennzeichnet, dass** es in einem UMTS-Verfahren verwendet wird und/oder in einer Basisstation (BS1) eines Mobilfunknetzes (10) und/oder in einer Mobilfunkstation (M1) eines Mobilfunknetzes (10).

13. Verfahren nach einem der vorhergehenden Ansprüche, **dadurch gekennzeichnet, dass** eine Vorrangregel festgelegt wird, wie zu verfahren ist, wenn in einem Frequenzbereich eine Kollision eines verteilten Kanals und eines lokalisierten Allokationen mit gleicher Priorität auftritt,
wobei vorzugsweise die Vorrangsregel von der Priorität abhängt.

14. Verfahren zur Datenübertragung gemäß einem Frequenzmultiplexverfahren,
mit den Schritten:
Vermerken in einer Datenübertragungsvorrichtung (M, BS):
erste Frequenzbereiche (FB4, FB12) eines verteilten ersten Datenübertragungskanals (DUK2),
einen zweiten Frequenzbereich (FB9 bis FB12) eines lokalisierten zweiten Datenübertragungskanals (DUK4), wobei der erste Datenübertragungskanal (DUK2) Vorrang vor dem zweiten Datenübertragungskanal (DUK4) hat,
einen dritten Frequenzbereich (FB5 bis FB8), in dem ein lokalisierter dritter Datenübertragungskanal (DUK1) liegt, wobei der dritte Datenübertragungskanal (DUK1) Vorrang vor dem ersten Datenübertragungskanal (DUK2) hat.

15. Verfahren zur Datenübertragung gemäß einem Frequenzmultiplexverfahren,
mit den Schritten:
Vermerken für mehrere aufeinander folgende Zeitschlitze (ZS1 bis ZS4) eines Zeitrahmens (ZR1) für ein Zeitmultiplexverfahren in einer Datenübertragungsvorrichtung (M, BS):
erste Frequenzbereiche (FB4, FB12) in denen ein erster Datenübertragungskanal (DUK2) liegt, wobei je Zeitschlitz (ZS1 bis ZS4) einer der ersten Frequenzbereiche (FB4, FB12) jeweils mindestens zwei Teilbereiche (FB4, FB2) enthält, zwischen denen ein Zwischenfrequenzbereich (FB5 bis FB11) liegt, der mindestens doppelt so breit oder mindestens fünf mal so breit ist wie einer der Teilbereiche (FB4, FB12) in diesem Zeitschlitz (ZS1 bis ZS4),
einen zweiten Frequenzbereich (FB9 bis FB12), in dem ein zweiter Datenübertragungskanal (DUK4) liegt, wobei der zweite Frequenzbereich (FB9 bis FB12) mindestens doppelt so breit wie ein Teilbereich (FB4) ist,
wobei mindestens in einem Zeitschlitz (ZS1) oder in mehreren Zeitschlitzen (ZS1 bis ZS4) des Zeitrahmens (ZR1) ein Teilbereich (FB12) eines ersten Frequenzbereiches in einem Frequenzbereich liegt, in dem in einem anderen Zeitschlitz (ZS2) des Zeitrahmens (ZR1) der zweite Frequenzbereich (FB9 bis FB12) liegt,
einen dritten Frequenzbereich (FB5 bis FB8), in dem ein dritter Datenübertragungskanal (DUK1) liegt, wobei der dritte Frequenzbereich (FB5 bis FB8) mindestens doppelt so breit oder mindestens fünf mal so breit wie ein Teilbereich (FB12) ist,
und wobei innerhalb des Zeitrahmens (ZR1) der dritte Frequenzbereich ausschließlich dem dritten Datenübertragungskanal (DUK1) zugeordnet ist.

16. Verfahren nach Anspruch 14 oder 15, **gekennzeichnet durch** den Schritt:
nach dem Vermerken Signalisieren (SI) von der ersten Datenübertragungsvorrichtung (BS2, M2) zu der zweiten Datenübertragungsvorrichtung (M2, BS2), dass für die Datenübertragung zwischen der ersten Datenübertragungsvorrichtung und der zweiten Datenübertragungsvorrichtung der erste Datenübertragungskanal oder der zweite Datenübertragungskanal verwendet werden soll.

17. Verfahren nach einem der Ansprüche 14 bis 16, **dadurch gekennzeichnet, dass** mindestens ein Vorrangdatum (N2 bis N10) versendet oder gespeichert wird, das eine Reihenfolge angibt, gemäß der der erste Datenübertragungskanal in einem Überlappungsfrequenzbereich von erstem Datenübertragungskanal und zweitem Datenübertragungskanal Vorrang vor dem zweiten Datenübertragungskanal hat, oder gemäß dem der zweite Datenübertragungskanal im Überlappungsfrequenzbereich Vorrang vor dem ersten Datenübertragungskanal hat.

18. Verfahren nach einem der Ansprüche 14 bis 17, **dadurch gekennzeichnet, dass** die erste Datenübertragungsvorrichtung eine Basisstation (BS2) eines Mobilfunknetzes (10) und die zweite Datenübertragungsvorrichtung eine Mobilstation (M2) des Mobilfunknetzes (10) ist,
oder dass die zweite Datenübertragungsvorrichtung eine Mobilstation (M2) eines Mobilfunknetzes (10) ist, und die erste Datenübertragungsvorrichtung eine Basisstation (BS3) des Mobilfunknetzes (10) ist,
und /oder wobei das Mobilfunknetz (10) ein UMTS-Netz ist.

19. Verfahren nach einem der Ansprüche 14 bis 18, **dadurch gekennzeichnet, dass** der Zeitrahmen (ZR1) eine Länge kleiner als 5 Millisekunden hat, vorzugsweise größer als 100 Mikrosekunden, insbesondere 0,5 Millisekunden oder
0,667 Millisekunden oder zwei Millisekunden.

20. Verfahren nach einem der Ansprüche 14 bis 19, **dadurch gekennzeichnet, dass** die vermerkten Daten gesendet (SI) werden.

21. Verfahren nach einem der vorhergehenden Ansprüche, **dadurch gekennzeichnet, dass** es bei der Datenübertragung mehrere räumliche Komponenten gibt, und
dass es für mindestens zwei dieser räumlichen Komponenten voneinander verschiedene Rangfolgen für Frequenzbereiche gibt.

22. Datenübertragungsvorrichtung (BS1, M1)
mit einer Datenübertragungseinheit (20, 30), die mindestens ein Datum (N2 bis N8) sendet oder empfängt, das eine Rangfolge angibt, gemäß der ein erster Datenübertragungskanal (DUK1, DUK2) in einem Frequenzbereich Vorrang vor einem zweiten Datenübertragungskanal (DUK2, DUK1) hat,
und mit einer Bearbeitungseinheit (S1, S2), die das Datum bearbeitet.

23. Datenübertragungsvorrichtung (BS1, M1) nach Anspruch 22, **gekennzeichnet durch** mindestens eine Einheit, die einen Verfahrensschritt nach einem der Ansprüche 1 bis 13 oder 21 ausführt.

24. Datenübertragungsvorrichtung (BS2, M2),
mit einer Speichereinheit oder mit einer Schaltungsanordnung, in der für mehrere aufeinander folgende Zeitschlitze (ZS1 bis ZS4) eines Zeitrahmens (ZR1) für ein Zeitmultiplexverfahren vermerkt sind:
ein erster Frequenzbereich (FB4, FB12) eines verteilten ersten Datenübertragungskanals (DUK2),
ein zweiter Frequenzbereich (FB9 bis FB12) eines lokalisierten zweiten Datenübertragungskanals (DUK4), wobei der erste Datenübertragungskanal (DUK2) Vorrang vor dem zweiten Datenübertragungskanal (DUK4) hat, und
ein dritter Frequenzbereich (FB5 bis FB8), in dem ein lokalisierter dritter Datenübertragungskanal (DUK1) liegt, wobei der dritte Datenübertragungskanal (DUK1) Vorrang vor dem ersten Datenübertragungskanal (DUK2) hat.

25. Datenübertragungsvorrichtung (BS2, M2) nach Anspruch 24, **gekennzeichnet durch** eine Einheit, die einen Verfahrensschritt nach einem der Ansprüche 14 bis 21 ausführt.

## Geänderte Patentansprüche

### Geänderte Patentansprüche gemäss Regel 137(2) EPÜ.

**1.** Verfahren zur Datenübertragung gemäß einem Frequenzmultiplexverfahren,
mit den Schritten:
Vermerken in einer Datenübertragungsvorrichtung (M, BS):
erste Frequenzbereiche (FB4, FB12) eines verteilten ersten Datenübertragungskanals (DUK2),
einen zweiten Frequenzbereich (FB9 bis FB12) eines lokalisierten zweiten Datenübertragungskanals (DUK4), wobei der erste Datenübertragungskanal (DUK2) Vorrang vor dem zweiten Datenübertragungskanal (DUK4) hat,
einen dritten Frequenzbereich (FB5 bis FB8), in dem ein lokalisierter dritter Datenübertragungskanal (DUK1) liegt, wobei der dritte Datenübertragungskanal (DUK1) Vorrang vor dem ersten Datenübertragungskanal (DUK2) hat,
**dadurch gekennzeichnet, dass** der lokalisierte zweite Datenübertragungskanal (DUK4) über mehrere Zeitschlitze (ZS1 bis ZS4) eines Zeitrahmens (ZR1), einen zusammenhängenden Frequenzbereich verwendet, der innerhalb der mehreren Zeitschlitze (ZS1 bis ZS4) nur zeitweise und nur in Teilabschnitten durch den verteilten ersten Datenübertragungskanal (DUK2) ausgespart wird, dem dann dort Vorrang gewährt wird.

**2.** Verfahren nach Anspruch 1, **gekennzeichnet durch** den Schritt:
nach dem Vermerken Signalisieren (SI) von der ersten Datenübertragungsvorrichtung (BS2, M2) zu der zweiten Datenübertragungsvorrichtung (M2, BS2), dass für die Datenübertragung zwischen der ersten Datenübertragungsvorrichtung und der zweiten Datenübertragungsvorrichtung der erste Datenübertragungskanal oder der zweite Datenübertragungskanal verwendet werden soll.

**3.** Verfahren nach Anspruch 1 oder 2, **dadurch gekennzeichnet, dass** mindestens ein Vorrangdatum versendet oder gespeichert wird, das eine Reihenfolge angibt, gemäß der der erste Datenübertragungskanal in einem Überlappungsfrequenzbereich von erstem Datenübertragungskanal und zweitem Datenübertragungskanal Vorrang vor dem zweiten Datenübertragungskanal hat, oder gemäß dem der zweite Datenübertragungskanal im Überlappungsfrequenzbereich Vorrang vor dem ersten Datenübertragungskanal hat.

**4.** Verfahren nach einem der Ansprüche 2 oder 3 soweit auf Anspruch 2 rückbezogen, **dadurch gekennzeichnet, dass** die erste Datenübertragungsvorrichtung eine Basisstation (BS2) eines Mobilfunknetzes (10) und die zweite Datenübertragungsvorrichtung eine Mobilstation (M2) des Mobilfunknetzes (10) ist.

**5.** Verfahren nach einem der Ansprüche 2 oder 3 soweit auf Anspruch 2 rückbezogen, **dadurch gekennzeichnet, dass** die erste Datenübertragungsvorrichtung eine Mobilstation (M2) eines Mobilfunknetzes (10) ist, und die zweite Datenübertragungsvorrichtung eine Basisstation (BS3) des Mobilfunknetzes (10) ist.

**6.** Verfahren nach Anspruch 4 oder 5, **dadurch gekennzeichnet, dass** das Mobilfunknetz (10) ein UMTS-Netz ist.

**7.** Verfahren nach einem der Ansprüche 1 bis 6, **dadurch gekennzeichnet, dass** der Zeitrahmen (ZR1) eine Länge kleiner als 5 Millisekunden hat, vorzugsweise größer als 100 Mikrosekunden, insbesondere 0,5 Millisekunden oder 0,667 Millisekunden oder zwei Millisekunden.

**8.** Verfahren nach einem der Ansprüche 1 bis 7, **dadurch gekennzeichnet, dass** die vermerkten Daten gesendet (SI) werden.

**9.** Verfahren nach einem der vorhergehenden Ansprüche, **dadurch gekennzeichnet, dass** es bei der Datenübertragung mehrere räumliche Komponenten einer Mehrantennenprozessierung (MIMO) gibt, und
dass es für mindestens zwei dieser räumlichen Komponenten voneinander verschiedene Rangfolgen für Frequenzbereiche gibt.

**10.** Datenübertragungsvorrichtung (BS2, M2),
mit einer Speichereinheit oder mit einer Schaltungsanordnung, in der für mehrere aufeinander folgende Zeitschlitze (ZS1 bis ZS4) eines Zeitrahmens (ZR1) für ein Zeitmultiplexverfahren vermerkt sind:
ein erster Frequenzbereich (FB4, FB12) eines verteilten ersten Datenübertragungskanals (DUK2),
ein zweiter Frequenzbereich (FB9 bis FB12) eines lokalisierten zweiten Datenübertragungskanals (DUK4), wobei der erste Datenübertragungskanal (DUK2) Vorrang vor dem zweiten Datenübertragungskanal (DUK4) hat, und
ein dritter Frequenzbereich (FB5 bis FB8), in dem ein lokalisierter dritter Datenübertragungskanal (DUK1) liegt, wobei der dritte Datenübertragungskanal (DUK1) Vorrang vor dem ersten Datenübertragungskanal (DUK2) hat,
**dadurch gekennzeichnet, dass** der lokalisierte zweite Datenübertragungskanal (DUK4) über mehrere Zeitschlitze (ZS1 bis ZS4) eines Zeitrahmens (ZR1), einen zusammenhängenden Frequenzbereich verwendet, der innerhalb der mehreren Zeitschlitze (ZS1 bis ZS4) nur zeitweise und nur in Teilabschnitten durch den verteilten ersten Datenübertragungskanal (DUK2) ausgespart wird, dem dann dort Vorrang gewährt wird.

**11.** Datenübertragungsvorrichtung (BS2, M2) nach Anspruch 10, **gekennzeichnet durch** eine Einheit, die einen Verfahrensschritt nach einem der Ansprüche 1 bis 9 ausführt.
